Europäisches Patentamt

European Patent Office

Office européen des brevets

(19)

(11) Veröffentlichungsnummer : **0 036 140**
**B1**

(12) **EUROPÄISCHE PATENTSCHRIFT**

(45) Veröffentlichungstag der Patentschrift :
**18.01.84**

(21) Anmeldenummer : **81101607.0**

(22) Anmeldetag : **06.03.81**

(51) Int. Cl.³ : **C 10 L   5/46**

(54) **Verfahren zur Herstellung von Briketts aus organischen Abfällen.**

(30) Priorität : **17.03.80 DE 3010259**

(43) Veröffentlichungstag der Anmeldung :
**23.09.81 Patentblatt 81/38**

(45) Bekanntmachung des Hinweises auf die Patenterteilung : **18.01.84 Patentblatt 84/03**

(84) Benannte Vertragsstaaten :
**AT BE CH FR GB IT LI LU NL SE**

(56) Entgegenhaltungen :
**FR-A-   784 344**
**FR-A-   994 789**
**FR-A- 2 399 477**
**FR-E-    51 617**
**GB-A- 1 286 532**
**US-A- 3 910 775**

(73) Patentinhaber : **Lindemann, Rolf W.**
**Birkenhügel 6**
**D-2863 Ritterhude (DE)**

(72) Erfinder : **Lindemann, Rolf W.**
**Birkenhügel 6**
**D-2863 Ritterhude (DE)**

(74) Vertreter : **Bruse, Willy Hans Heinrich**
**Bergiusstrasse 35**
**D-2800 Bremen 33 (DE)**

## Verfahren zur Herstellung von Briketts aus organischen Abfällen

Die Erfindung betrifft ein Verfahren zur Herstellung von Briketts aus organischen Abfällen unter Zusatz von Kohle und unter Anwendung von Druck.

Aus der US-A-3 910 775 sind ein Verfahren und eine Vorrichtung zur Verarbeitung von organischen Abfällen, wie Müll, Klärschlamm od. dgl., zu Briketts sowie zur Behandlung von Abwässern bekannt. In einem kontinuierlichen Ablauf werden organische Abfälle zunächst von metallischen Beimengungen befreit, dann zerkleinert und in gleichbleibender Menge kontinuierlich einer Walzenmühle zugeführt, die ebenso kontinuierlich Briketts produziert. Diese Briketts können entweder verbrannt oder als Filtermaterial in einer Klärschlammentwässerungsvorrichtung benutzt werden, bevor sie anschließend verbrannt werden. Durch den Druck in der Walzenmühle erfolgt wenigstens teilweise eine Sterilisation der organischen Abfälle mit entsprechender Abtötung pathologischer Keime, so daß die Briketts transportierbar und auch lagerbar sind. Bekannt ist aus dieser Druckschrift jedoch auch die Beimengung von Abfällen aus der Kohleverarbeitung zu den Abfällen aus dem Hausmüll, Klärschlamm oder dgl. Diese Beimengung von Abfällen aus der Kohleverarbeitung erfolgt mit dem Ziel, bei Verwendung der Briketts als Filtermaterial bei der Klärschlammentwässerung die Phosphate des Abwassers aus dem Filtermaterial auszuscheiden.

Zum Stande der Technik gehört nach der FR-A-994 789 auch die Herstellung von Briketts aus organischen Abfällen bei einem Preßdruck von ca. 800 bar, um dadurch eine Teilverschmelzung der Abfälle zur Vermeidung eines Bindemittelzusatzes zu erreichen. Eine Heizwertanreicherung und eine Behandlung zum Zwecke der Hygienisierung findet dabei nicht statt. Es gibt auch keinen Hinweis auf die ggf. vorteilhafte Wirkung solcher Maßnahmen, weil die Verwendung als kommerzielles Brennmaterial in Feuerungen nicht vorgesehen ist.

Aufgabe der Erfindung ist die Schaffung eines Verfahrens zur Herstellung von Briketts aus organischen Abfällen, deren Verwendung als kommerzielles Brennmaterial in Feuerungen des Haushalts und der Industrie möglich ist.

Zur Lösung dieser Aufgabe besteht das erfindungsgemäße Verfahren im wesentlichen darin, daß der organische Abfall mit Kohle oder einem anderen Produkt ähnlichen hohen Heizwerts bis auf einen gewünschten höheren Heizwert angereichert wird, worauf ein Preßvorgang mit einem Preßdruck zwischen 1 000 und 1 300 bar bei einer Ausgangstemperatur von 100 °C bis 120 °C folgt. Nach dem erfindungsgemäßen Verfahren werden den organischen Abfällen, insbesondere Hausmüll, Klärschlamm od. dgl. Kohle in solchen Mengen zugeführt, daß ein vorherbestimmter Heizwert der Mischung erreicht wird. Die Kohle muß demzufolge einen bestimmten Anteil des organischen Abfalls ausmachen, um diesen höheren und konstant einzustellenden Heizwert zu gewährleisten, sowie um einen gleichbleibenden Abbrand der auf diese Weise hergestellten Briketts zu garantieren. Bei der Produktaufbereitung wird nach der Zerkleinerung und Magnetabscheidung metallischer Beimengungen neben der Kohle auch Kalk (CaO) zugegeben. Sämtliche Stoffe werden gemischt und unter sehr hohem Druck von 1 000 bis 1 300 bar zu Briketts beliebiger Form verpreßt. Durch die über eine gewisse Zeit anhaltende hohe Temperatur (über 70 °C für mindestens 30 Minuten) aufgrund von Reibungswärme und exothermer Reaktionsenergie und durch pH-Wert-Verschiebung erfolgt eine Hygienisierung, durch die die Briketts transportierbar, lagerbar und gefahrlos verwendbar werden. Bei den Reaktionsbedingungen in der Presse (Druck, Reibungswärme, exotherme Reaktionswärme) erfolgt weiter eine Vorverschwelung der organischen Zellgewebe und Papiermolekülgruppen einschließlich einer Zersetzung der Kunststoffe, so daß eine chemisch-thermische Strukturveränderung im Preßling stattfindet, welche den Heizwert erhöht.

Der besondere wirtschaftliche Wert der Erfindung wird durch die Anreicherung von Abfallprodukten, wie Müll, Klärschlamm und dgl. zu einem hochwertigen Brennmaterial mit konstantem Heizwert erreicht. Dieses Brennmaterial ist sowohl für den Hausbrand als auch für die Verwendung in Industriefeuerungen, sowie für die Wandlung von Primärenergie verwendbar. Der Heizwert solcher kommerziell verwendbaren Brennmaterialien läßt sich ohne Schwierigkeiten auf etwa 16 750 kJ (4 000 Kcal) bis 20 097 kJ (4 800 Kcal) und auch noch höher einstellen.

## Anspruch

Verfahren zur Herstellung von Briketts aus organischen Produkten und Abfallprodukten unter Zusatz von organischen Stoffen höheren Heizwertes, insbesondere Kohle, und unter Anwendung von Druck, dadurch gekennzeichnet, daß der organische Abfall unter Zusatz von Kalk (CaO) mit der Kohle oder einem anderen Produkt höheren Heizwertes bis auf einen gewünschten höheren Heizwert angereichert wird, worauf ein Preßvorgang mit einem Preßdruck zwischen 1 000 und 1 300 bar bei einer Ausgangstemperatur von 100-120 °C folgt, wodurch die Briketts für einen Zeitraum von mindestens 30 Minuten auf einer Temperatur von mindestens 70 °C gehalten werden.

## Claim

Process for producing briquettes from organic products and waste, by adding organic substances having a higher heating value particularly coal and using pressure, characterized in that organic waste is enriched, with coal or another product having a higher heating value up to the desired higher heating value with addition of lime (CaO), then a compression is carried out with a pressure between 1,000 and 1,300 bars at an exit temperature of 100-120 °C, whereby the briquettes are maintained at a temperature of at least 70 °C for a period of at least 30 minutes.

**Revendication**

Procédé de fabrication de briquettes à partir de produits et de déchets organiques avec addition de substances organiques de pouvoir calorifique plus élevé, en particulier de charbon et utilisation de pression, caractérisé en ce que les déchets organiques sont enrichis, avec addition de chaux (CaO), par du charbon ou un autre produit de pouvoir calorifique plus élevé jusqu'à un pouvoir calorifique plus élevé souhaité, après quoi une compression est effectuée à une pression comprise entre 1 000 et 1 300 bars et à une température de sortie de 100 à 120 °C, grâce à quoi les briquettes sont maintenues pendant une durée d'au moins 30 minutes à une température d'au moins 70 °C.